Europäisches Patentamt

European Patent Office

Office européen des brevets

(19)

(11) Numéro de publication: **0 160 592**
**A1**

## (12) DEMANDE DE BREVET EUROPEEN

(21) Numéro de dépôt: **85400563.4**

(22) Date de dépôt: **22.03.85**

(51) Int. Cl.⁴: **G 01 N 29/04**

(30) Priorité: **26.03.84 FR 8404659**

(43) Date de publication de la demande:
**06.11.85 Bulletin 85/45**

(84) Etats contractants désignés:
**AT BE CH DE GB IT LI LU NL SE**

(71) Demandeur: **SOCIETE NATIONALE DES CHEMINS DE FER FRANCAIS**
**88, rue Saint-Lazare**
**F-75436 Paris Cedex 09(FR)**

(71) Demandeur: **MATIX INDUSTRIES (Société Anonyme)**
**59, rue Saint-Lazare**
**F-75009 Paris(FR)**

(72) Inventeur: **Turbe, Jean-Pierre**
**26, rue Fernand Collot**
**F-77100 Nanteuil-Les-Meaux(FR)**

(74) Mandataire: **L'Helgoualch, Jean et al,**
**OFFICE PICARD 134 Boulevard de Clichy**
**F-75018 Paris(FR)**

(54) Procédé et dispositif de détection et de reconnaissance automatique de discontinuités et irrégularités de rails de voie ferrée.

(57) L'invention concerne le contrôle des rails de voies ferrée. Le dispositif comprend un chariot (4) susceptible de se déplacer sur la voie, et comporte au moins deux sondes ultrasonores émettrices et/ou réceptrices (V, $0_1$, $0_2$) émettant dans des directions différentes, appliquées contre le plan de roulement du rail (1), et au moins une sonde ultrasonore (SA) située à proximité du rail, décalée latéralement, émettant un faisceau ultrasonore vers le côté de l'âme du rail.

Application notamment à la détection et à la reconnaissance des joints éclissés des rails de voie ferrée.

FIG_3

EP 0 160 592 A1

**0160592**

## Procédé et dispositif de détection et de reconnaissance automatique de discontinuités et irrégularités de rails de voie ferrée

L'invention concerne le contrôle des rails de voies ferrées, et plus particulièrement un procédé de reconnaissance automatique des discontinuités ou irrégularités et notamment les joints éclissés des rails de voie ferrée, ainsi qu'un dispositif pour la mise en oeuvre d'un tel procédé.

Les contraintes et les surcharges dynamiques auxquelles la voie est soumise provoquent le développement de défauts internes dans le rail, tels que taches ovales, fissures horizontales, transversales ou longidudinales, étoilures, etc.

Il est important de pouvoir détecter ces défauts en voie par une méthode non destructrice, afin de pouvoir changer à temps les portions de rails défectueux en faisant dans la mesure du possible la distinction entre les défauts et les joints ou autres discontinuités qui peuvent apparaître dans les rails.

La méthode la plus répandue de contrôle non destructif de l'état interne des rails en voie est l'auscultation du rail par ultrasons. Cette technique consiste à mettre en contact avec le champignon du rail des sondes émettrices, réceptrices ou émettrices-réceptrices dont l'orientation est adaptée aux types de défauts que l'on recherche.

On utilise généralement des appareils légers mis en oeuvre par un opérateur ou des appareils lourds embarqués à bord d'autorails.

Dans le premier cas, l'opérateur ausculte une file ou deux files de rail simultanément au moyen d'appareils à ultrasons adaptés à cette technique. Une sonde est mise en contact avec la table de roulement de chaque rail. L'opérateur avance lentement, à une vitesse de 3km/h environ, et vérifie sur l'écran de l'appareil toutes les détections ultrasonores. Il est amené alors à analyser le résultat affiché par l'appareil et à faire la corrélation avec le rail. En effet, toute détection ultrasonore n'est pas forcément liée à un défaut interne. Par exemple, les trous d'éclissage des rails apparaissent très nettement sur l'appareil mais ne doivent pas être considérés comme des défauts. Un autre exemple est celui qui concerne la détection de l'extrémité des rails lorsque ceux-ci sont éclissés. Le rail, dans ce cas, se comporte comme un rail qui serait rompu verticalement sur toute sa hauteur. L'appareil à ultrasons indique dans ce cas des anomalies de sondage. L'opérateur fait facilement la différence entre un rail rompu et l'extrémité de celui-ci lorsqu'il est éclissé. Il interprète les résultats du sondage ultrasonore afin d'effectuer le tri entre certaines informations, aidé pour cela par le fait qu'il voit le rail.

Par contre, dans le deuxième cas, lorsque le matériel de détection est embarqué dans un autorail d'auscultation, cette analyse est rendue très difficile compte tenu de la vitesse de déplacement de l'engin (qui peut être de l'ordre de 30 à 50km/h). Il est apparu nécessaire dans ce cas, d'étudier un procédé qui permet de distinguer les défauts réels dans le rail par rapport à toutes les détections réalisées par les appareils afin d'effectuer un tri automatique des résultats.

La présente invention a pour but de permettre de détecter et distinguer automatiquement les joints éclissés des défauts et fissures présents dans les rails de voie ferrée au moyen d'un matériel de détection embarqué sur un véhicule pouvant se déplacer à une vitesse relativement importante.

0160592

L'invention a donc pour objet un procédé de détection et de reconnaissance automatique des discontinuités et notamment les joints éclissés des rails de voie ferrée, en voie et en continu, au moyen de faisceaux d'ondes ultrasonores, permettant de distinguer les joints éclissés des défauts du rail en effectuant un tri automatique des signaux de détection.

L'invention a également pour objet un dispositif pour la mise en oeuvre d'un tel procédé, pouvant être utilisé en voie à des vitesses relativement élevées, de l'ordre de 30 à 50km/h.

Plus particulièrement, le procédé suivant l'invention permet de détecter toute discontinuité ou irrégularité, et d'effectuer automatiquement la distinction entre un joint éclissé reliant deux rails, un joint soudé et fissuré, et un rail présentant un défaut connu éclissé.

Le procédé conforme à la présente invention, pour la détection et la reconnaissance automatique de discontinuités et notamment de joints éclissés de rails de voie ferrée, en voie et en continu, utilise des faisceaux d'ondes ultrasonores, et se distingue en ce qu'on émet au moins deux faisceaux d'orientations différentes à travers le rail, et au moins un faisceau d'ondes ultrasonores dans l'air, au voisinage de l'âme du rail, et on compare les signaux reçus.

Suivant une forme préférentielle de mise en oeuvre du procédé de l'invention, l'un des deux faisceaux émis à travers le rail est perpendiculaire au plan de roulement du rail tandis que l'autre est oblique par rapport à l'axe du rail. Les deux faisceaux sont émis de manière à être réfléchis par la face inférieure du patin du rail, approximativement au même endroit.

Le procédé de l'invention est fondé sur le fait que les échos reçus se différencient nettement selon la nature de l'obstacle rencontré par le faisceau d'ondes ultrasonores, c'est-à-dire un joint éclissé, un joint soudé ou un rail éclissé. En particulier, le passage d'un faisceau ultrasonore sur un trou d'éclisse engendre des signaux spécifiques parfaitement identifiables.

La table logique ci-après est établie en fonction des deux données principales généralement retenues, qui sont les trous d'éclisses dans l'âme du rail d'une part, et les éclisses existantes d'autre part.

|  | Trous d'éclisses | Eclisses |
|---|---|---|
| A) Joint éclissé | oui | oui |
| B) Joint soudé | non (1) | oui |
|  | oui (2) | non |
| C) Rail éclissé | non | oui |

(1) Dans le cas général des soudures électriques
(2) Dans le cas de soudures aluminothermiques lorsque les deux rails n'ont pas été coupés ou changés.

La discrimination automatique des détections peut être effectuée à partir du résultat de cette logique, comme indiqué en détail ci-après.

Les réflexions du faisceau émis perpendiculairement au plan de roulement du rail sont différenciées automatiquement par un sélecteur qui émet un signal V caractéristique du trou d'éclisse. Par ailleurs, toute anomalie telle que défaut interne, défaut de surface, défaut d'orientation, trou d'éclisse et interface entre deux rails éclissés entraîne une interruption du faisceau émis obliquement, ce qui se traduit par une information T émise par la sonde réceptrice.

Enfin, lorsqu'il rencontre le bord supérieur d'une éclisse, le faisceau ultrasonore émis dans l'air est réfléchi et l'écho capté par la sonde entraîne l'émission d'un signal SA par l'intermédiaire d'un sélecteur électronique.

La définition logique d'un joint éclissé est alors donnée par: ( SA . V . T ).

Le dispositif conforme à l'invention est adapté à la mise en oeuvre du procédé ci-dessus. Il comprend un chariot portant au moins deux sondes ultrasonores émettrices et/ou réceptrices émettant dans des directions différentes appliquées contre le plan de roulement du rail, et au moins une sonde ultrasonore située à proximité du rail, décalée latéralement, émettant un faisceau ultrasonore vers le congé de raccordement de l'âme et du patin du rail.

Les caractéristiques et avantages de l'invention apparaîtront plus en détail dans la description ci-après, relative à une forme préférentielle et non limitative de réalisation, en référence aux dessins annexés, qui représentent:

Figure 1:    une vue schématique de côté montrant la disposition des sondes ultrasonores par rapport à un rail éclissé.

Figure 2:    une vue en bout du rail montrant la position des sondes par rapport à l'éclisse.

Figure 3:    une vue schématique d'un dispositif selon l'invention.

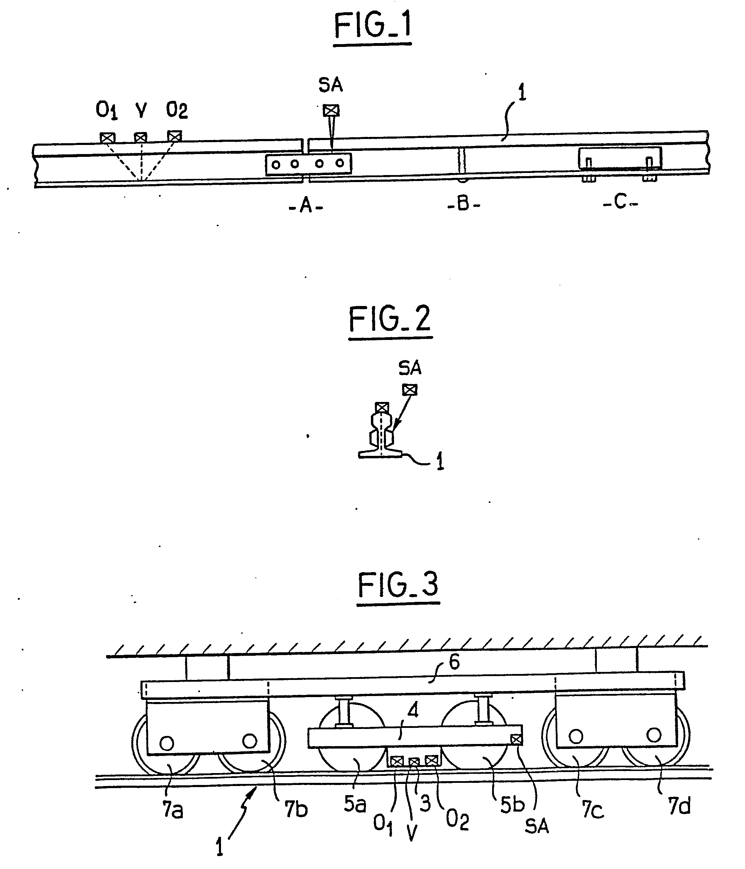

La ligne de rail (1) représenté sur la figure 1 comporte un joint éclissé (A), un joint soudé (B) et un rail éclissé (C) qui doivent être différenciés au niveau de l'auscultation par les sondes ultrasonores.

Le dispositif suivant l'invention dont un exemple est représenté sur la figure 3, comporte un chariot portesondes (2) de type usuel, susceptible d'être tracté par un véhicule ferroviaire. Le chariot porte plusieurs sondes V, O1, O2 et SA, dont le positionnement par rapport au rail (1) est clairement représenté sur les figures 1 et 2. Les sondes V, O1 et O2 sont fixées sur un support (3) solidaire d'un chariot (4) roulant sur le rail (1) à l'aide de galets (5a) et (5b), et relié au bogie (6) d'un véhicule roulant au moyen des roues (7a) à (7d). La position du support des sondes est réglable en hauteur par des moyens connus. Le chariot (4) porte une sonde V émettrice-réceptrice d'ultrasons maintenue par des moyens appropriés et connus en contact sonore avec la surface supérieure du rail (1). Cette sonde V émet un faisceau d'ondes ultrasonores haute fréquence perpendiculaire à la surface de roulement du rail, qui traverse le champignon et l'âme du rail pour se réfléchir sur la face inférieure du patin du rail, perpendiculairement à celle-ci, retraverse l'âme et le champignon du rail et est capté par la sonde émettrice-réceptrice V. Le faisceau ultrasonore est dévié lorsqu'il rencontre un obstacle tel qu'un défaut ou un trou d'éclisse dans le rail. Les réflexions dues aux trous d'éclisses sont différenciées automatiquement par un sélecteur qui permet de trier les défauts d'orientation horizontale et les trous d'éclisse, et émet un signal spécifique du trou d'éclisse.

Le chariot (4) porte encore deux sondes ultrasonores haute fréquence $O_1$ (émettrice) et $O_2$ (réceptrice) en contact sonore avec le rail, transmettant des ondes dans le plan longitudinal du rail suivant des directions obliques. Les ondes émises par la sonde $O_1$ se réfléchissent sous incidence non nulle sur la face inférieure du rail et sont captées par la sonde réceptrice $O_2$. Les deux sondes $O_1$ et $O_2$ sont disposées de part et d'autre de la sonde V. Toute anomalie telle que défaut interne, défaut de surface, de toute orientation ainsi que les trous d'éclisse et l'interface entre deux rails éclissés se traduit par une interruption de la réception de l'onde par la sonde réceptrice $O_2$.

Enfin, le dispositif comporte une quatrième sonde SA émettrice-réceptrice émettant un faisceau ultrasonore basse fréquence, dans l'air vers l'éclisse (A) présente sur chaque face de l'âme du rail, sous le champignon. L'onde est réfléchie par le bord supérieurde l'éclisse, et l'onde réfléchie est captée par la partie réceptrice de la sonde SA qui est connectée à un sélecteur électronique qui génère un signal SA chaque fois que la sonde capte un écho.

Comme le montrent les figures 2 et 3, la sonde SA n'est pas en contact avec le rail, mais se trouve au-dessus de lui, dans une position décalée latéralement par rapport à son axe longitudinal.

Bien entendu, les sondes V, $O_1$ et $O_2$ sont maintenues sur le rail et dans son plan longitudinal par des moyens appropriés de type connu.

Conformément au procédé de l'invention, lorsque le chariot se déplace sur les rails de la voie ferrée, les sondes ultrasonores haute fréquence V, $O_1$ et $O_2$ émettent un faisceau ultrasonore à travers le rail tandis que la sonde basse fréquence SA émet une onde dans l'air en direction du congé de raccordement de l'âme et du patin du rail où se trouve fixée l'éclisse, le cas échéant.

Lorsque, sur le trajet du chariot en déplacement, se présente un joint éclissé (A) comportant à la fois des trous d'éclisses et une éclisse sur l'âme du rail, le sélecteur de la sonde V émet un signal V résultant de la réflexion des ondes ultrasonores sur les trous d'éclisses. Le faisceau émis par la sonde $O_1$ est dévié par l'interface entre les extrémités des deux rails éclissés, et la réception du faisceau ultrasonore par la sonde $O_2$ se trouve interrompue entraînant l'émission d'un signal T. Enfin, la sonde émettrice-réceptrice SA reçoit un écho résultant de la réflexion des ondes sur le bord supérieur de l'éclisse.

Ainsi, la réunion des trois signaux V, T et SA, enregistrée par un dispositif électronique approprié, permet de détecter le joint éclissé.

Au contraire, au passage sur un joint soudé (B), la sonde SA n'enregistre aucun écho et le dispositif de détection du joint éclissé n'est donc pas actionné. De même, au passage sur un rail éclissé, l'éclisse renvoie un écho sur la sonde SA mais le faisceau ultrasonore émis par la sonde $O_1$ n'est pas dévié et le signal T n'est donc pas émis.

Bien entendu, le décalage entre les positions des sondes sur le chariot est corrigé automatiquement par une technique connue, lors de l'exploitation des signaux.

0160592

REVENDICATIONS

1. Procédé de détection et de reconnaissance automatique de discontinuités ou irrégularités de rails de voie ferrée, en voie et en continu, au moyen de faisceaux d'ondes ultrasonores, caractérisé en ce que l'on émet au moins deux faisceaux d'orientations différentes à travers le rail, et au moins un faisceau d'ondes ultrasonores dans l'air, au voisinage de l'âme du rail, et on compare les signaux reçus.

2. Procédé selon la revendication 1, caractérisé en ce que l'un des deux faisceaux émis à travers le rail est perpendiculaire au plan de roulement du rail tandis que l'autre est oblique par rapport à l'axe du rail.

3. Procédé selon la revendication 2, caractérisé en ce que les deux faisceaux sont réfléchis par la face inférieure du patin du rail, approximativement au même endroit.

4. Dispositif pour la détection et la reconaissance automatique de discontinuités ou irrégularités de rails de voie ferrée, en voie et en continu, comprenant un chariot (4) susceptible de se déplacer sur la voie, portant des sondes ultrasonores, caractérisé en ce qu'il comporte au moins deux sondes ultrasonores émettrices et/ou réceptrices (V, $O_1$, $O_2$) émettant dans des directions différentes, appliquées contre le plan de roulement du rail (1), et au moins une sonde ultrasonore (SA) située à proximité du rail, décalée latéralement, émettant un faisceau ultrasonore vers le côté de l'âme du rail.

5. Dispositif selon la revendication 4, caractérisé en ce qu'il comporte une sonde émettrice ($O_1$) émettant un faisceau oblique et une sonde réceptrice ($O_2$) associée, disposées de part et d'autre d'une sonde (V) émettant perpendiculairement au plan de roulement du rail (1).

0160592

6. Dispositif selon la revendication 5, caractérisé en ce que la sonde (SA) est une sonde émettrice-réceptrice émettant dans l'air un faisceau ultrasonore basse fréquence dirigé vers le congé de raccordement de l'âme et du patin du rail.

## FIG_1

SA

$O_1$  V  $O_2$

1

-A-    -B-    -C-

## FIG_2

SA

1

## FIG_3

6

4

7a    7b    5a    3    5b    7c    7d

$O_1$  V  $O_2$    SA

1

# RAPPORT DE RECHERCHE EUROPEENNE

Office européen
des brevets

## DOCUMENTS CONSIDERES COMME PERTINENTS

| Catégorie | Citation du document avec indication, en cas de besoin. des parties pertinentes | Revendication concernee | CLASSEMENT DE LA DEMANDE (Int. Cl.4) |
|---|---|---|---|
| A | US-A-3 135 109  (K.O. WERNER)<br>* Figure 2 *<br><br>--- | 1 | G 01 N  29/04 |
| A | US-A-4 174 636  (D.A. PAGANO)<br>* Page de garde *<br><br>--- | 1 | |
| A | FR-A-1 325 885  (I.L. JOY)<br>* Page 12 *<br><br>--- | 1 | |
| A | GB-A-1 120 334  (AUTOMATION INDUSTRIES, INC.)<br>* Revendications 1-10 *<br><br>--- | 1 | |
| A | WO-A-8 203 920  (AUTOMATION INDUSTRIES INC.)<br>* Page de garde *<br><br>----- | 1 | |

DOMAINES TECHNIQUES
RECHERCHES (Int. Cl.4)

G 01 N

Le présent rapport de recherche a été établi pour toutes les revendications

| Lieu de la recherche | Date d'achèvement de la recherche | Examinateur |
|---|---|---|
| LA HAYE | 01-08-1985 | DUCHATELLIER M.A. |